# EUROPEAN PATENT APPLICATION

(11) **EP 1 932 435 A2**
(43) Date of publication of application: **18.06.2008**
(21) Application number: 07115772.1
(22) Date of filing: 05.09.2007
(51) Int. Cl.: A23L 1/24, A23L 3/3508, A23L 3/358

(54) **Non-Sour, Unpastuerized, Microbiologically-Stable Food Compositions with Reduced Salt Content and Methods of Producing**

(30) Priority: 12.12.2006 US 609632
(71) Applicant: KRAFT FOODS HOLDINGS, INC., Northfield, Illinois 60093 (US)
(72) Inventor: Loh, Jimbay P., Green Oaks, IL 60048 (US); Hong, Yeong-Ching Albert, Kildeer, IL 60047 (US); Kelly-Harris, Sandra E., Hazel Crest, IL 60657 (US); Zheng, Zuoxing, Palatine, IL 60074 (US); Subramanian, Krishnan, Oakmont, IL 60061 (US); Stubbs, Tim, Glenview, IL 60025 (US); Lapp, Barbara, Evanston, IL 60204 (US)
(74) Representative: Smaggasgale, Gillian Helen

(57) **Abstract**

Low pH, microbiologically stable, unpasteurized food compositions with reduced sourness and reduced salt content and methods of making same are provided. These food compositions are prepared without receiving a pasteurization or other heat treatment by acidifying a foodstuff with a membrane acidic electrodialyzed composition, and/or addition of edible inorganic acids and/or their metal acid salts, to provide low pH values of about 4.6 or less, wherein the total organic acid content is 0.22 moles per 1000 grams of food composition or less, effective to enhance microbiological stability yet without introducing an objectionable sour taste or otherwise adversely affecting organoleptic properties of the resulting food compositions.

## Description

The present invention is a continuation-in-part of United States Patent Application Serial Number 11/100,487 filed April 7, 2005 (Docket 77214), which is a continuation-in-part application of United States Patent Application Serial Number 10/956,907 filed October 1, 2004 (Docket 77146), which is a continuation-in-part application of United States Patent Application Serial Numbers 10/784,404 and 10/784,699 both filed February 23, 2004, and of United States Patent Application Serial Number 10/941,578 filed September 15, 2004 (Docket 77039), all of which are hereby incorporated by reference.

The present invention is directed to a food compositions and method for their preparation. Particularly, food compositions are prepared with electrodialyzed composition and/or edible inorganic acids or their acid salts in amounts effective for providing a food composition of pH 4.6 or less with enhanced microbiological-stability and palatable reduced sourness and without receiving a final pasteurization treatment. Preferably, the food compositions of this invention are substantially free of organic acids, and they optionally may be prepared in a low sodium salt format.

### BACKGROUND

Food manufacturers produce finished food products which ideally are both organoleptically-pleasing and sufficiently microbiologically-stable. Generally, food preservation has been approached in the past, for instance, via acidulation, thermal treatment, chemical preservatives, hydrostatic treatment, refrigeration, and combinations thereof. The challenge that is often faced is improving shelf or refrigeration stability without diminishing the desirable sensory attributes and, thus, the commercial value of the food.

Food manufacturers are generally familiar with a technique known as synergistic preservation to control a wide range of microorganisms such as bacteria, yeast, and fungi. Synergistic preservation is based on the interactive, antimicrobial effects of formulation components. These effects are determined by the type and percent of acid(s) and salt(s) used in the formulation, as well as the formulation's pH and water activity (Aw). For instance, many pourable salad dressings in emulsion or dispersion formats also include antimycotic agents such as polylysine, sorbic acid, sodium benzoate, potassium benzoate, and/or potassium sorbate to lengthen shelf-life. In addition, refrigeration has a known bacteriostatic effect against microorganisms which are sensitive to low temperatures. Simpler techniques for food preservation which do not require attention to and coordination of many variables would be desirable.

Food processing often requires pH adjustments to obtain desired product stabilities. The direct addition of food acidulants (such as acetic acid or lactic acid) inevitably leads to significant (often negative) alterations in taste in such acidified foods. Low pH products may also result in undesirable precipitates which detract from the organoleptic quality of the food and make additional processing more difficult. For instance, with respect to food compositions which contain dairy products, such as milk and/or cheese, the use of acidification with organic acid to provide a shelf stable product leads to problems which may include
(1) isoelectric precipitation of casein leading to grainy texture, emulsion breakdown, etc., and
(2) most importantly, objectionable sour taste, which also may be referred to in terms of objectionable tartness or "acidic bite."

The sourness intensity or acidic bite of low pH (high acidity) food products makes them generally less attractive for direct consumption in quantity (e.g., lemon juice). Perceived sourness intensity generally is inversely proportional to the pH of acidic food products that are acidified with conventional acidulants (e.g., acetic acid, lactic acid, citric acid, vinegar). Some highly acidic foods are also heavily sweetened to counter the intense sourness (e.g., lemonade). Others are formulated with high fat content and/or with high salt content. In some cases, those acidified products are only stable under refrigeration condition. For instance, in mild or dairy product based salad dressings, such as ranch, creamy cucumber, and buttermilk flavored dressings, among others, at low pH (e.g., pH 4.6 or lower), the sour flavor imparted by a traditional acetic acid preservation system provides a less desirable product from an organoleptic standpoint as the acidic bite imparted may be objectionable to many consumers. The sourness imparted to mild or dairy product based salad dressings becomes even more critical in reduced-calorie formulations partially due to high buffering capacity of these dairy-based products.

Reduced-calorie salad dressings, and other reduced-calorie food products, may have similar constituents as their full-calorie counterparts. However, the caloric content typically is reduced by replacement of all or part of the oil of a full-calorie formulation with higher water content. This replacement reduces overall calories but also tends to have the undesired side effect(s) of altering the taste of the dressing and/or compromising microbial stability. Because the increased moisture level in reduced-calorie food product formulations increases the potential for microbiological activity, the demands on the microbiological stabilizing system employed in such increased-moisture reduced-calorie formulations also are increased. However, as indicated, elevating a food formulation's acid content to meet these microbiological stability demands creates other problems, as such adjustments significantly impact the formulation's tartness and flavor. U.S. Patent No. 4,927,657 discloses what is said to be a reduced tartness salad dressing having a preservation system comprised of at least two edible acids as a complete replacement for conventional acid stabilizing systems (such as 100% acetic or lactic acid) at standard or high total levels of acid. The edible acids are buffered to an increased pH using one or more edible salts to reduce tartness. Sugar usage is also described to enhance tartness reduction. Such approach may help to reduce tartness, but increased product pH and sugar content are often undesirably related to reduced microbiological stability and increased caloric content of the acidified products, respectively. U.S. Patent No. 5,683,737 to Erickson et al. describes a mayonnaise or dressing composition represented to have minimal objectionable acidic bite which includes a starch component and an antimicrobial amount of a partially or fully hydrolyzed glucana-delta-Iactane wherein the partially or fully hydrolyzed glucono-delta-lactone is present in a concentration up to about 1% by weight, the resulting composition having a pH of about 3.5 or less. The selection and the use of certain food acid(s) such as described in the above-mentioned U.S. patents can provide minor sourness reduction in low pH food products. However, such benefit becomes insignificant in very low pH food products, particularly those having low fat content (or high moisture content). In addition, the microbiological stability of these products can only be maintained by the use of high salt content and/or high fat content. In order to formulate low sodium products without high fat content or sweetness, a lower pH is generally required. The resulting increase in the use level of conventional acidulants such as acetic acid, lactic acid, and glucono-delta-lactone to achieve a very low product pH (e.g., pH 3.2 or lower) typically results in objectionably high sourness. Although acceptable products may be formulated at higher pH with reduced tartness, these products are generally not microbiologically stable at low salt content and ambient temperature; thus, expensive refrigeration distribution must be used. U.S. Publication No. 2004/0170747 A1 describes a shelf stable, squeezable cheese condiment that is ambient stable and not tart at pH below 3.75. The cheese condiment contains an oil-in-water emulsion and a cheese component that has been added before emulsion formation. The acidulants used are acetic acid, hydrochloric acid, malic acid, glucono-delta-lactone, lactic acid, phosphoric acid, or a mixture thereof. In order to reduce fat content, U.S. Publication No. 2004/0101613 A1 describes water/oil/water emulsions that are microbiologically stable. Shelf stability was defined by "no mold growth" and "no flavor loss" for at least about nine months when kept covered or sealed at ambient temperature. No challenge test (by inoculation of spoilage bacteria, yeast and mold) was performed to demonstrate or ensure microbiological stability under realistic manufacture and/or use conditions.

Traditionally, acidification has also been used to preserve fruits and vegetables. However, traditionally acidified fruits and vegetables are generally very sour due to lactic acid fermentation or direct acidification with vinegar or lactic acid. Additionally, high levels of salt are often necessary to enhance the microbial stability or shelf-life of fruits and vegetables. Consequently, large amounts of sweeteners are generally added to traditionally acidified fruits and vegetables to offset acidic bite or excessive tartness.

Food products also have been significantly thermally processed (e.g., pasteurized or a more extreme thermal treatment, such as retort) to provide shelf or refrigeration stability. Thermal processing potentially complicates production, degrades nutrition value, and adds to production costs. In addition, heat sensitive food products in particular may not tolerate pasteurization or other significant heat treatment used to stabilize the foodstuff without sacrificing desirable sensory attributes thereof, e.g., taste, mouthfeel, texture, color, odor, or lack thereof, among others. For instance, certain widely used non-sweetened foods containing a dairy product (e.g., milk, cheese, butter, cream, dairy proteins, and the like), such as some salad dressings, dips, spreads, and sauces, fall under this category, as undesirable or diminished desirable flavor and/or mouthfeel, among others, results from a significant heat treatment thereof. As another example, fruits and vegetables lose flavor, texture, nutrition, and appearance of fresh-like quality of raw fruits and vegetables after heat treatment.

New and simple methods are desired for the preparation of shelf-stable, acidified food compositions without undesirable sour off-taste, especially heat sensitive types, which do not require pasteurization treatment and/or high addition rates of sweeteners, fat, sodium salt, or other preservation agents. U.S. Publication No. 2005/0220969A1 describes low pH (pH 3.5 or less, preferably pH 3.2 or less), shelf-stable, unpasteurized food compositions with reduced sourness and methods of making same are provided. These food compositions are prepared without receiving pasteurization or other heat treatment by acidifying a foodstuff with a membrane acidic electrodialyzed (ED) composition

### SUMMARY

The present invention is generally directed to methods for preparing food compositions without receiving a final pasteurization treatment in which the food compositions are acidified to a pH of 4.6 or less with a membrane acidic electrodialyzed composition (ED) and/or addition of edible inorganic acids or metal salts or a mixture thereof, while total organic acid content is 0.22 moles per 1000 grams of food composition or less, effective for enhancing microbiological stability without introducing an objectionable sour taste or adversely affecting other organoleptic properties of the food compositions. In accordance with embodiments herein, food compositions with no or reduced sourness can be more conveniently manufactured with cold-processing conditions without compromising microbial stability or desired sensory attributes of the finished food composition. Also, these microbiologically stable acidified food compositions having reduced sourness are obtained at significantly reduced levels of sweetener/sweetness, fat, sodium, and/or preservatives.

Clean tasting, acidic ED compositions may be prepared and used for lowering the pH foods to 4.6 or lower. Use of edible inorganic acids or their metal acid salts is another alternative to lower the pH of the food compositions. Inorganic acids and their corresponding metal acid salts include, for example, hydrochloric acid, sulfuric acid, metal acid sulfates, and the like. However, the use of these alternatives to food acidulants alone may not always eliminate or significantly reduce perceived sourness in the resulting low pH (pH 4.6 or less) unpasteurized foods and provide an acceptable product. Maintaining a low level of total organic acid in a given product (as consumed) is important in providing an acceptable product. Effective ingredient selection and formulation to lower organic content in finished products is needed for some formulated food products to provide acceptable products.

In one aspect, microbiologically-stable, high moisture (a_{w}=0.75 or greater) food compositions having reduced sourness are provided by preparing a foodstuff with an edible acidic medium or acidulant selected from the group consisting of a membrane acidic electrodialyzed composition, an edible inorganic acid, an edible metal salt of an inorganic acid, and a mixture thereof, in an amount effective for providing a food composition with a final pH of 4.6 or less, in the absence of a final pasteurization treatment, and wherein the food composition has a total organic acid content of 0.22 moles per 1000 grams of food composition or less. Methods of making these food compositions include preparing the food composition with the acidulant in an amount effective for providing the food composition with a final pH of 4.6 or less, in another aspect a pH of about 4.2 or less, and in another aspect a pH of about 3.5 to about 4.0.

The method is effective for providing a microbiologically stable food composition without a thermal treatment which has no objectionable sour taste or acidic bite normally associated with low pH foods by maintaining a lower organic acid content. The food composition has a total organic acid content of about 0.22 moles per 1000 grams of food composition or less, preferably a total organic acid content of about 0.12 moles per 1000 grams or less, and an Aw of about 0.75 or greater, in another aspect about 0.85 or greater, and in another aspect about 0.90 or greater. For prepared foods this may be obtained by ingredient selection and/or modification. More preferably, no more than a necessary amount of organic acids is added to the food composition only for providing required flavor and/or taste. The present invention expands the pH range claimed in U.S. Publication No. 2005/0220969A1 to pH of about 4.6 or less within which a truly microbiologically stable product was not previously thought possible. At such product pH and a strict safety standard, this is partly accomplished by developing a statistically verifiable microbiological model to ensure the inhibition and inactivation of key potential acid-resistant spoilage microorganisms.

Shelf-stable, cold-processed food compositions with reduced sourness which may be prepared with this general method include, for example, salad dressings, soups, mayonnaise, sauces, gravies, spreads, dips, dressings, fillings, toppings, desserts, juices, beverages, marinades, mayo, snacks, and the like. The shelf-stable, cold-processed food compositions with reduced sourness may also include edible components and/or ingredients from sources selected from dairy, egg, meat, seafood, legumes, starches, cereals, vegetables, fruits, herbs, spices, the like, and mixtures thereof.

Refrigeration-stable, cold-processed food compositions with reduced sourness which may be prepared with this general method include, for example, salad dressings, soups, mayonnaise, sauces, gravies, spreads, dips, dressings, filings, toppings, desserts, juices, beverages, marinades, and snacks.

In one particular aspect, a shelf-stable, cold-processed salad dressing with reduced sourness and a method for preparing it are provided. The method of preparing the salad dressing without pasteurization treatment includes blending edible oil, water, emulsifier, protein, flavor, spice, antioxidant, particulate (e.g., vegetables, fruits, herbs), color, starch, gum, sweetener, seasoning, mold inhibitor, and an acidulant selected from the group consisting of electrodialyzed composition (i.e., ED water), an edible inorganic acid, an edible metal acid salt of an inorganic acid, and mixtures thereof, in an amount effective for providing a pH of about 4.6 or less, in another aspect a pH of about 4.2 or less, and in another aspect a pH of about 3.5 to about 4.6, while total organic acid content is 0.22 moles per 1000 grams of food composition or less, effective to provide a cold-processed shelf-stable acidified mixture. The salad dressing may comprise spoonable or pourable salad dressing compositions, including high moisture, reduced-calorie, low-fat, and/or reduced-sodium salad dressing compositions.

In another particular aspect, a refrigeration-stable, cold-processed salad dressing with reduced sourness and a method for preparing it are provided. The method of preparing the salad dressing without pasteurization treatment includes blending edible oil, water, emulsifier, protein, flavor, spice, antioxidant, particulate (e.g., vegetables, fruits, herbs), color, starch, gum, sweetener, seasoning, mold inhibitor, and an acidulant selected from the group consisting of electrodialyzed composition (i.e., ED water), an edible inorganic acid, an edible metal acid salt of an inorganic acid, and mixtures thereof, in an amount effective for providing a pH of 4.6 or less, in another aspect a pH of 4.2 or less, and in another aspect a pH of about 3.5 to about 4.6, while total organic acid content is 0.22 moles per 1000 grams of food composition or less, effective to provide a cold-processed refrigeration-stable acidified mixture. The salad dressing may comprise spoonable or pourable salad dressing compositions, including high moisture, reduced-calorie, low-fat, and/or reduced-sodium salad dressing compositions.

In another particular aspect, refrigeration-stable crisp fruit, vegetable, or combination thereof, with reduced sourness and a method for preparing it are provided. The method of preparing the crisp fruits or vegetables without pasteurization treatment includes combining fresh cut fruits or vegetables with an acidulant selected from the group consisting of electrodialyzed composition (i.e., ED water), an edible inorganic acid, an edible metal acid salt of an inorganic acid, and mixtures thereof, in an amount effective for providing a pH of 4.6 or less, preferably a pH of 4.2 or less, while total organic acid content is 0.22 moles per 1000 grams of food composition or less, effective to provide a cold-processed refrigeration-stable fruits or vegetables. The fruits or vegetables of the invention have a shelf life under refrigeration conditions of at least one month, preferably at least two months, more preferably at least three months, and most preferably at least four months.

### BRIEF DESCRIPTION OF THE DRAWINGS

FIG. 1 is one example of a membrane electrodialysis system for decreasing pH.
FIG. 2 is another example of a membrane electrodialysis system for decreasing pH.
FIG. 3 is a contour plot based on the statistical micro model for yeast for the fat free Catalina dressing of Example 1.
FIG. 4 is a contour plot based on the statistical micro model for Homofermentive Lactobacilli for the fat free Catalina dressing of Example 1.
FIG. 5 is a contour plot based on the statistical micro model for Heterofermentive Lactobacilli for the fat free Catalina dressing of Example 1.

### DETAILED DESCRIPTION

Microbiologically-stable, non-sour tasting food composition may be prepared without receiving a final pasteurization treatment or other form of thermal treatment by acidifying a foodstuff with an acidulant selected from the group consisting of acidic electrodialyzed (ED) composition (i.e., electrodialyzed water), an edible inorganic acid, an edible metal acid salt of an inorganic acid, and mixtures thereof, in an amount effective for providing a pH of 4.6 or less, in another aspect a pH of 4.2 or less, and in another aspect providing a pH of about 3.5 to about 4.6, while total organic acid content is 0.22 moles per 1000 grams of food composition or less, effective to provide a cold-processed microbiologically-stable acidified mixture having no objectionable sour taste or acidic bite. Consequently, the possible need to fortify the food composition with sweetener to offset acidic bite or excessive tartness is reduced or eliminated.

As described below, an aqueous solution is used as a feed stream and is processed using membrane electrodialysis to form the ED composition. The ED composition may be used in the formulation and/or preparation of the food product. ED compositions and edible inorganic acids or corresponding metal acid salts thereof used herein are suitable for human consumption.

As used herein "pasteurization" refers to all treatments other than acidulation of a food composition sufficient to render spoilage and/or fermentation microorganisms nonviable. This term, by way of example, encompasses thermal treatments meeting the above definition, inclusive of even more robust thermal treatments (e.g., retort), and also can refer to non-thermal methods of pasteurization other than acidulation of foodstuffs, which may be non-chemical methods such as hydrostatic pressure treatment, (pulse) electrical field treatment using radio frequency (RF) energy, microwave treatment, electron beam treatment, X-ray treatment, combinations of these, and the like. "Nonviable" microorganisms are effectively inactivated (bactericidal) or inhibited (for growth). "Acidulant" refers to a ph-controlling agent which reduces the pH of a food composition. "Suitable for human consumption" means free from harmful or unapproved chemicals or contaminants, pathogens and objectionable flavor or taste.

"Microbiologically stable" generally means the food products stored under ambient or refrigeration conditions are safe for consumption. Microbiological stability is defined by the absence of microbial outgrowth of spoilage or pathogenic microorganisms under storage condition over the entire shelf life.

"Shelf stable food products" generally means the preserved food products stored under ambient conditions are safe for consumption. Shelf stability is determined by safety or microbiological stability. For example, acidified compositions are inoculated with composite cultures of *Salmonella, E*. *coli,* yeast, and heterofermentative and homofermentative *Lactobacillus* strains. The inoculated samples are held at ambient temperature (72° F) and then analyzed for each of these bacterial strains at various time intervals. An overall reduction in initial inoculated counts for a minimum of sixteen weeks is required for a product to be considered shelf stable. In another case, acidified compositions that show no evidence of microbial outgrowth of spoilage or pathogenic microorganisms under specific storage condition over the intended shelf life may also be considered "shelf stable."

"Refrigeration stable food products" generally means the preserved food products stored under refrigeration conditions are safe for consumption. Refrigeration stability is determined by safety or microbiological stability.

"Shelf life" means shelf life under specific (ambient or refrigeration) storage conditions. Product shelf life is determined by organoleptic or eating quality of products. Product stability is determined by safety or microbiological stability. Typically, food compositions that are shelf stable under ambient storage condition are also refrigeration stable. If a refrigerated distribution and storage system is used, "shelf life" and "product stability" can be extended for the food compositions that are stable under ambient storage. In a particular aspect, shelf lives of about at least six months or preferably nine to twelve months are obtained for ambient stable products. In another aspect, shelf lives of at least about one month, more preferably at least about two months, even more preferably at least about three months, and most preferably at least about four months are obtained for refrigeration stable products. All shelf-stable food compositions of the present invention are considered refrigeration stable with increased stability and extended shelf life. Not all refrigeration stable food compositions of the present invention are considered shelf stable under ambient storage condition.

The microbiologically-stable, cold processed food compositions of the present invention represents a drastically simplified microstability model for foods allowing rapid formulation and preparation of food products that ensures the microbiological stability and, hence, the shelf life of the cold processed food composition by pH management alone, and with sodium content (typically in the aqueous phase thereof) significantly reduced and only as an optional factor or preservative. This microstability model for foods prepared in accordance with aspects of this invention present a significant simplification of the existing or many commonly used models based on multi-varieties surface response models, such as those used, e.g., for salad dressing manufacture. Food products at higher acidic pH levels than those prescribed herein may require a pasteurization or more severe thermal treatment, high salt concentration, and/or refrigeration to ensure microbiological stability and shelf-life of the food product. Food compositions prepared in accordance with aspects of this invention also avoid the need for expensive processing equipment used in alternative non-thermal preservation methods such as those used in hydrostatic pressure treatments of foods. The food preparation techniques in accordance with aspects of the present invention are particularly suitable for the production of certain non-sweetened, heat sensitive products (e.g., salad dressings, fruits, and vegetables) that cannot be processed thermally without incurring undesirable flavor/quality loss or other adverse impacts on the sensory properties thereof.

In one particular aspect, a microbiologically stable, high moisture (Aw > 0.75, preferably Aw > 0.85) food composition is preserved without receiving a pasteurization step during its manufacture by controlling the product equilibrium pH to about pH 4.6 or less and using an edible, low- or non-sour tasting acidulant as a pH-controlling agent. The acidulant is selected from, but not limited to, an acidic electrodialyzed composition, edible inorganic acid(s), edible metal salts of inorganic acid or mixtures thereof. The inventive composition is microbiologically stable under refrigerated or ambient storage conditions.

Electrodialyzed (TED) Composition. In a preferred aspect, the food acidulant used for acidifying unpasteurized food compositions is a clean tasting, acidic electrodialyzed (ED) composition suitable for lowering the pH of foods. The ED composition may be generated by electrodialysis. Generally, electrodialysis (ED) is used in connection with the separation of dissolved salts or other naturally occurring impurities/ions from one aqueous solution to another aqueous solution. The separation of these dissolved salts or other impurities results from ion migration through semi-permeable, ion-selective membranes under the influence of an applied electric field that is established between a cathode (negative potential electrode) and an anode (positive potential electrode). The membranes may be selective for monovalent or multivalent ions depending on whether separation is desired between monovalent or multivalent cations and/or anions. The separation process results in a salt or impurity concentrated stream (known as a concentrate or brine) and in a salt or impurity depleted stream (known as a diluate). The concentrate and diluate streams flow in solution compartments in the electrodialysis apparatus that are disposed between the anode and cathode and that are separated by alternating cation and anion selective membranes. The outermost compartments adjacent the anode and cathode electrodes have a recirculating electrode-rinse solution flowing therethrough to maintain the cathode and anode electrodes dean.

Aqueous Solution. Aqueous feed solutions which may be treated with the ED method to produce acidic ED composition include any mineral or ion rich aqueous solution obtainable from natural water sources such as spring water, well water, municipal water, sea water, and/or artificially ion-enriched water free from contamination and excessive chlorination (for example, greater than about 2 ppm of free chlorine), An aqueous feed solution for ED treatment should have a total cation or total anion concentration of about 0.0001N to about 1.8N which is effective for providing an initial conductivity of about 0.1 to about 200 mS/cm. As used herein, "total cation concentration" or "individual cation concentration" means any cation (such as Na⁺, K⁺, Ca⁺⁺, Mg⁺⁺) concentration excluding hydrogen ion concentration, "Total anion concentration" or "individual anion concentration" means any anion (such as Cl⁻, F⁻, SO₄⁻², PO₄⁻³) concentration excluding hydroxyl ion concentration. Ion concentrations may be determined using techniques known in the art, such as for example, inductive coupled plasma atomic emission spectroscopy for selected cations and ion chromatography for selected anions.

In an important aspect, the aqueous feed solution to be treated with ED may have a total cation or total anion concentration of about 0.002N to about 1.0N which is effective for providing an initial conductivity of about 1.0 to about 30 mS/cm. For example, the aqueous solution to be treated with ED may include at least one of the following:

| **Cations:** | **Concentration (N)** |
|---|---|
| calcium | 0-0.2 |
| magnesium | 0-0.002 |
| potassium | 0-0.01 |
| sodium | 0-1.7 |

| **Anions:** | **Concentration (N)** |
|---|---|
| bicarbonate | 0-0.07 |
| chloride | 0-1.7 |
| sulfate | 0-0.01 |

All ion concentrations cannot be zero as the total ion concentration must be about 0.002N to about 1.0N. Other non-toxic, edible ions may also be included.

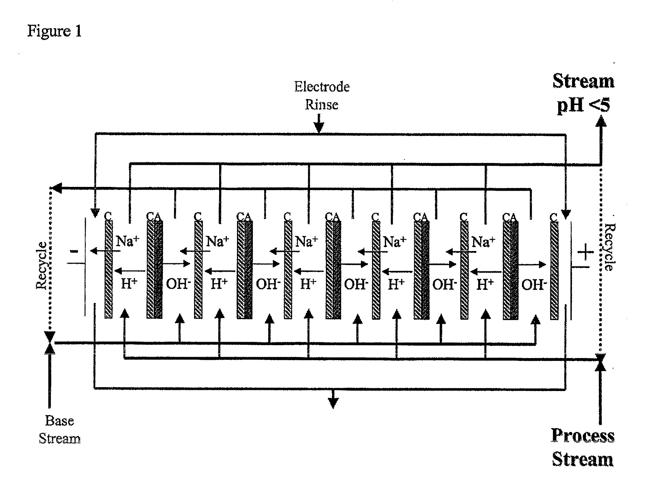

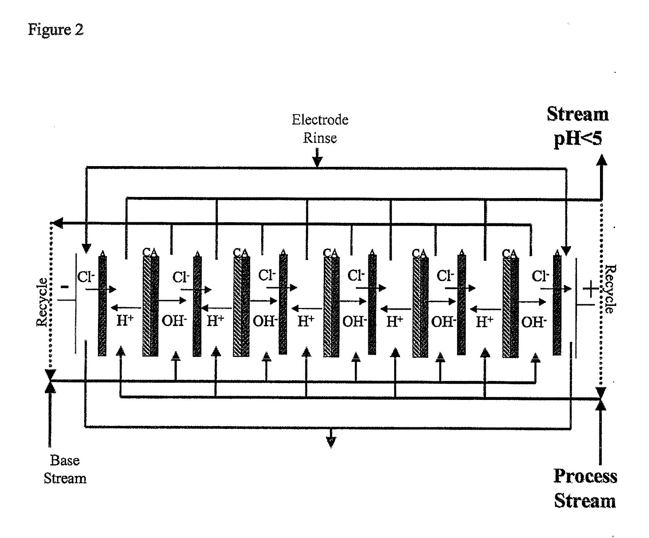

Membrane Electrodialysis. As illustrated in FIGS. 1 and 2, membrane electrodialysis may be conducted using a bipolar membrane and anionic or cationic membranes. The membranes are disposed between a cathode and anode and subjected to an electrical field. The membranes form separate compartments and materials flowing through those compartments may be collected separately. An example of an electrodialysis apparatus containing ion-selective membranes is EUR6 (available from Eurodia Industrie, Wissous, France). Suitable membranes are available, for example, from Tokuyama (Japan). A bipolar membrane includes a cationic membrane and an anionic membrane joined together.

In accordance with one aspect, an aqueous solution is contacted with the ion-selective membranes. Aqueous solutions may be processed in a batch mode, semi-continuous mode, or continuous mode by flowing an aqueous solution over the ion-selective membranes. An electrical potential is applied across the anode and cathode for a time effective for providing an electrodialyzed solution with the desired pH and ion concentrations. Processing times in batch mode and flow rates in semi-continuous mode or continuous mode are a function of the number of ion-selective membranes that are used and the amount of electrical potential applied. Hence, resulting ED solutions can be monitored and further processed until a desired pH and ion concentration is achieved. Generally, an electrical potential of about 0.1 to about 10 volts is provided across the anode and cathode electrode in each cell.

As shown in FIGS. and 2, the pH of the aqueous solution may be adjusted to a pH range of about 0 to about 7 by contacting the aqueous solution with at least one bipolar membrane, preferably a plurality of bipolar membranes, which includes cationic membranes on both sides of the bipolar membrane. Materials from the compartments to the left of the bipolar membrane are collected for subsequent use. Materials collected from the compartments to the right of the bipolar membranes may be recirculated back through the membranes or circulated to a second membrane electrodialysis as many times as needed to provide an aqueous solution having a pH of about 0 to about 7, preferably, about 1 to about 5. Materials from the compartments to the left of the bipolar membranes may also be recirculated back through the membranes. Materials from the compartments adjacent to the anode and cathode may be recirculated back through the membranes.

Electrodialyzed Composition Product. After treatment with membrane electrodialysis, the pH-altered ED composition has a total cation or anion concentration of less than about 1.0N, a concentration of any individual ion of less than about 0.6 N, and a free chlorine content of less than 2 ppm. In a preferred embodiment, the ED composition has a total cation concentration or anion concentration of less than about 0.5 N, individual cation or anion concentration of less than 0.3N, and a free chlorine content of less than 1 ppm. For example, the electrodialyzed composition product may contain at least one of the following:

| **Cations:** | **Concentration (N)** |
|---|---|
| calcium | 0-0.1 |
| magnesium | 0-0.001 |
| potassium | 0-0.005 |
| sodium | 0-0.9 |

| **Anions:** | **Concentration (N)** |
|---|---|
| bicarbonate | 0-0.04 |
| chloride | 0-0.9 |
| sulfate | 0-0.005 |

Other non-toxic, edible ions may also be included in amounts limited mainly by the taste impact of the individual ions.

After treatment with membrane electrodialysis, ED compositions will have a pH ranging from about 1 to about 4.6. Treated solutions have a free chlorine content of less than 1 ppm and do not have objectionable tastes and/or odors. ED compositions may be used in the preparation a wide variety of shelf-stable, cold-processed food products.

Edible Inorganic Acids and Salts Thereof. Use of edible inorganic acids or their acid salts is another alternative as the food acidulant used to lower the food pH without introducing unacceptable sourness to the acidified product. Inorganic acids include edible mineral acids, such as hydrochloric acid, sulfuric acid, etc., and their edible metal acid salts, such as metal acid sulfates (e.g., sodium bisulfate, potassium bisulfate), and the like. However, the use of these alternatives to food acidulants alone may not always eliminate or significantly reduce perceived sourness in the resulting low pH (pH 4.6 or less) foods and provide an acceptable product. Maintaining a low level of total "organic" acid in a given product (as consumed) is important in providing an acceptable product. Effective ingredient selection and formulation to lower organic content in finished products is needed for some formulated food products to provide acceptable products.

Total Organic Acid Content. Total organic acid content in a food product can influence the perceived sourness intensity. The "organic acids" in a preserved food mainly come from (I) the added edible food acidulants including, but not limited to, acetic acid, adipic acid, citric acid, fumaric acid, gluconic acid, lactic acid, malic acid, phosphoric acid, and tartaric acid; and (2) naturally-occurring organic acids in food ingredients. Organic acids in food ingredients normally exist in the form of metal salts of the organic acid (e.g., calcium citrate), which do not impart a sour taste at high pH but will definitely contribute to perceived sourness at low pH (e.g., pH 4.6 or less) as metal salts of organic acid convert into corresponding acid form (e.g., citric acid). Thus, "total organic acid content" is defined practically hereafter as the sum of all the above-mentioned food acidulants and all naturally-occurring organic acids (including those not mentioned above such as oxalic acid, succinic acid, ascorbic acid, chlorogenic acid, and the like). An organic acid profile can be readily obtained using an appropriate analytical method, such as S. Rantakokko, S. Mustonen, M. Yritys, and T. Vartianen, "Ion Chromatographic Method for the Determination of Selected Inorganic Anions and Organic Acids from Raw and Drinking Waters Using Suppressor Current Switching to Reduce The Background Noise from Journal of Liquid Chromatography and Related Technology," 27: 821-842 (2004). The quantity of individual organic acids can be measured and summed up to give "total organic acid content" which is conveniently expressed in "moles per 1000 grams of finished food composition." Phosphoric acid, technically speaking an inorganic acid, is counted in the total "organic" acid content hereafter due to its high pKa (about 2.12) relative to that of other food approved inorganic acids (e.g., hydrochloric acid and sulfuric acid). Within the pH range (i.e., pH 4.6 or less) and the context of the present invention, phosphoric acid can significantly contribute to sour taste of the acidified composition and is generally unacceptable as a non-sour acidulant.

The inventive composition may be characterized by a low level of total organic acids of below about 0.22 moles per 1000 g of final food products, particularly below about 0.12 moles per 1000 g of final food products, and more particularly below about 0.06 moles per 1000 g of final food products.

Optional Additives. Optionally, the present invention also provides formulation flexibility to allow drastic sodium reduction (e.g., 30% reduction or more relative to commercial, fully salted product) without compromising microbiological stability because salt is no longer necessary as a primary preservation factor. Instead, pH serves as the primary preservation factor in the inventive food compositions. In one aspect, sodium content in the acidified microbiologically-stable, cold-processed food composition does not exceed 0.5 moles per 1000 g, particularly 0.3 moles per 1000 g, and more particularly 0.1 moles per 1000 g, of acidified food composition depending on fat content. The weight of aqueous phase is defined as total weight of composition minus fat content. In another aspect, the inventive shelf-stablc food composition is up to 100% sodium reduced (or a salt to water ratio of 0.0025 or less). In the inventive food composition, salt or sodium content may be determined solely based on taste requirement independent of microbiological stability. Sodium-free salt enhancer such as potassium and/or magnesium salts (e.g., chloride) may also be used to enhance the salty taste of the inventive food compositions.

The inventive food composition may further include an edible antimycotic agent such as sorbic acid/sorbate or benzoic acid/ benzoate at a level effective to inhibit yeast and/or mold growth, preferably at a level of about 0.01% or greater, in the said food composition.

The inventive food composition may also further include a preservative such as bacterocin, potassium sorbate, EDTA, polylysine, propionate, or a combination thereof at an amount of about 0.005% or greater in the said food composition.

Other functional and/or flavoring ingredients unrelated to microbiological stability of the composition also may be included at levels and to the extent they do not significantly contribute to the total organic acid content or lead to acidic bite or other undesirable sensory properties in the finished food product. These optional ingredients may include, but are not limited to, starch, gum, fiber, protein, natural or artificial flavor, extract, juice, natural or intense sweetener, emulsifier, antioxidant, spice, herb, vitamins, mineral, phytochemical, and small particulates of fruit, vegetable, meat (e.g., bacon), fish (e.g., anchovies), the like, or combinations thereof.

In one aspect, fruits (e.g., mango, apple, plum, apricot, pineapple, papaya, watermelon, cantaloupe, strawberry, raspberry, orange, or the like) or vegetables (e.g., bell pepper, onion, carrot, tomato, beet, broccoli, celery, corn, peas, pea pods, cauliflower, zucchini, asparagus, green beans, water chestnuts, potatoes, bamboo shoots, or the like) of the invention may further comprise soluble calcium salt at a level effective to maintain crispness and to enhance the firmness or textural properties of the food products, preferably at a level of about 0.05% or greater. The unpasteurized fruits and vegetables of the invention have texture, flavor, and taste similar to that of fresh-cut fruits and vegetables.

Preparation of Microbiologically-Stable Food Compositions, As indicated, the acidulant-comprising ED composition, an edible inorganic acid or their metal acid salts, or mixtures thereof, is useful for preservation of formulated foods without receiving a pasteurization treatment. More specifically, in one aspect, these acidulants, e.g., ED compositions, may be formulated into a food product by complete or partial substitution for the water normally present in the formula. The microbiologically-stable, cold-processed food compositions characterized by a significantly reduced sourness when prepared according to aspects of this invention include, but are not limited to, dressings (e.g., salad dressings), juices/beverages, mayonnaise, sauces, gravies, spreads, dips, fillings, toppings, marinades, desserts, fruits, vegetables, snacks, or mixtures thereof. In one aspect, the inventive food composition comprises a pourable or spoonable viscous phase in which it may include food components or ingredients from sources selected, for example, from dairy, starch/cereal, egg, meat, seafood, fruit, vegetable, or mixtures thereof, in a multi-camponent product. In another aspect, the inventive food composition comprises crisp, fresh-like fruits and vegetables.

The acidified food products are microbiologically-stable and do not require a significant thermal treatment, such as a pasteurization step, to achieve such stability. The preserved food products have no objectionable sour taste or off-flavors commonly associated with the use of food acidulants.

Generally, microbiologically-stable food compositions are prepared using ED compositions having a pH of about 4.6 or less. The ED composition is directly incorporated into the preparation of the food composition. In one aspect, cold-processing conditions are maintained during the preparation of the food product by controlling the food temperature to a value less than about 165° F, particularly less than about 120° F. A small amount of conventional food acidulant(s), such as vinegar, may still be used mainly for flavor and/or taste purposes as long as the total organic acid content does not exceed 0.22 moles per 1000 grams of the final food product, preferably not exceeding 0.12 moles per 1000 grams of the final food product, and more preferably not exceeding 0.06 moles per 1000 grams of the final product. For food compositions normally expected to be sour (e.g., cultured dairy products, fruit flavored products), the sourness of these food compositions after further acidification to a pH of about 4.6 or less can be significantly reduced by completely or partially acidifying the food compositions using ED composition, inorganic acid, metal acid salt of inorganic acid, or mixture thereof as long as the total organic acid content in the finished food composition can be kept below 0.22 moles per 1000 grams of the finished food compositions.

As salt or sodium content is no long a major factor in ensuring microbiological stability in a low pH (e.g., about pH 4.6 or less) and non-thermally processed (e.g., unpasteurized) product, any level of sodium reduction is possible (e.g., unsalted, lightly salted). Thus, the principles of the present invention can also be used to provide nutritionally improved food products. Additional nutritional improvements are possible with the present invention by lowering sourness-masking ingredients, such as sweetener and/or fat. In one non-limiting aspect, food compositions with reduced sourness can be prepared in accordance with this invention containing total sweeteners in an amount less than 3% sucrose sweetness equivalent and, particularly, less than 1.5% sucrose sweetness equivalent. As will be appreciated, the amount and types of sweetener(s) used can vary depending on the food type.

In another aspect, the microbiologically-stable food compositions with reduced sourness can be formulated as fat-free, reduced-fat, or low-fat compositions in accordance with this invention, even though the relative moisture content of the reduced-fat foodstuffs generally may be greater than their full-fat counterparts.

Preparation of Microbiologically-Stable Salad Dressing. Microbiologically-stable, cold-processed salad dressings with reduced sourness may be prepared, without a pasteurization step, by blending all ingredients including edible oil, food grade emulsifier, starch, gum, egg, water, salt, spices, protein, natural or artificial flavor, extract, juice, natural or intense sweetener, fiber, antioxidant, spice, herb, vitamins, mineral, phytochemical and small particulates of fruit, vegetable, meat, fish, and the like, and ED composition (or hydrochloric acid, sulfuric acid, sodium bisulfate, potassium bisulfate) in an amount effective for providing a pH of 4.6 or less, and in another aspect a pH of 4.0 or less, while total organic acid content is 0.22 moles per 1000 grams of food composition or less, effective to provide a cold-processed, microbiologically-stable acidified mixture. The salad dressing may comprise salad dressing compositions with different consistencies ranging from pourable to spoonable.

The emulsion forms of the salad dressings generally are oil-in-water emulsions. The emulsified salad dressing formulations include milder or dairy product-based salad dressings, such as, but not limited to, ranch, creamy cucumber, and buttermilk flavored dressings. In lieu of an emulsion, the salad dressing also may be formed as a dispersion-type dressing, such as, but not limited to, Italian and Catalina dressings. Standard blending and homogenizing procedures have been used to prepare viscous emulsified or dispersed salad dressing products.

The salad dressing compositions may also include high moisture and/or protein content, reduced-calorie, low fat or fat-free, reduced sodium, spoonable, or pourable salad dressing compositions. In one aspect, the inventive microbiologically-stable salad dressing composition may be up to 100% sodium-reduced (having a salt to water ratio of 0.0025 or less).

The salad dressings also can optionally include various other seasoning additives such as salt, spices, dairy flavors, cheese flavors, sweeteners, flavoring organic acidulant, and other ingredients imparting taste characteristics to the composition. Also, preservatives, colors (not simulating egg yolk color), and stabilizers may be included.

Dairy products, for instance, milk, buttermilk, milk concentrates (dry, liquid, or paste), butter, cheese, cheese flavors, whey powder/ protein concentrates/isolates, and combinations thereof also may be included in an amount effective to impart a desired flavor component, texture, mouthfeel, or aroma note.

The oil ingredient can be any edible triglyceride oily lipid, and particularly may be a edible vegetable oil, such as soybean oil, canola oil, safflower oil, corn oil, sunflower oil, peanut oil, olive oil, cottonseed oil, and mixtures thereof. In salad dressing type products, the vegetable oil content is about 0.1 to about 40%, particularly about 0.5% to about 30%. Hard fat ingredients, such as food grade fats like butterfat, palm kernel oil and cocoa butter, optionally may be included in minor amounts to the extent they can be emulsified or dispersed in the product. A portion of the vegetable oil may be replaced by a starch base and/or gum while maintaining the product at a desirable viscosity

If the salad dressing is formed as an emulsion, a synthetic or non-egg food grade emulsifer and/or egg product can be used for that function. The egg product includes egg yolk, egg whites, and albumen. Non-egg emulsifiers may be, for example, polyoxyethylene sorbitan fatty acid esters, which may have a hydrophillic-lipaphillic balance (HLB) of 10-18, such as polyoxyethylene sorbitan monostearate (e.g., polysorbate 60), polyoxyethylene sorbitan monooleate (e.g., polysorbate 80). The amount of non-egg food grade emulsifier may vary depending on the amount of egg yolk co-present in the same formulation but generally may range from about 0.05% to 0.5%.

The total water content may vary depending on the type of salad dressing product being manufactured. The water content generally may range, for example, from about 5% to about 80% (including water contributed by all ingredients), particularly from about 15% to about 30%.

Any one of a number of commonly-available or otherwise suitable food-grade starches may be employed in the salad dressings. Examples include starches derived from corn, sorghum, tapioca, wheat, and so forth. These starches may be modified to improve rheological properties by oxidation, acid-catalyzed conversion, and/or cross-linking by organic or inorganic chemicals, and the like. These need not be freeze-resistant starches. The amount of starch base added to a particular formulation may vary depending on the amount of vegetable oil being used and replaced by the starch, in the formulation.

As suitable edible flavoring acidulants used in the salad dressing products, acetic acid such as in the form of vinegar, citric acid such as in the form of lemon or lime juice, or malic acid, and so forth, may be used in small amounts effective for that purpose to the extent no objectionable sourness intensity is imparted and the total organic acid content does not exceed 0.22 mole per 1000 grams of acidified composition.

Other flavoring and spices which may be used may include, for example, salt, mustard or mustard oil, pepper, egg flavors, paprika, yeast extract, flavor enhancers, and mixture thereof. The flavorings and spices are generally present in an amount of about 0.5% to about 8%. Of these, salt may be present in an amount of about 0.5% to about 3%.

As other optional additives, gums may be included as surfactants. The gums may be selected from among xanthan gums, alginates, pectins, gum tragacanth, locust bean gum, guar gum, gum arabic, and mixtures thereof. The amount of gum added may range from about 0.1% to about 2%.

Natural or artificial preservatives, such as ethylenediamine tetracetic acid (EDTA) or a salt thereof, sodium benzoate, monosodium glutamate, potassium sorbate, polylysine, propionate, bacteriocin, or a mixture thereof, may be included in an amount of 0.005% or greater.

Antimycotic agents, such as sorbic acid/sorbate or benzoic acid/ benzoate, may be included in an amount effective to inhibit yeast and mold growth, preferably in an amount of 0.01% or greater.

Colors also may be included, such as whitening agents like titanium dioxide. As with other food compositions, color, consistency in taste, textural appearance, and mouthfeel, for example, in the salad dressing products can be important for maintaining consumer satisfaction.

This invention also encompasses microbiologically-stable cold-processed mayonnaise type products which generally have higher oil levels but otherwise comparable formulations as salad dressings. The mayonnaise product is a spoonable non-pourable semi-solid material. The food composition also may be a sauce. Sauces include those containing about 5 to about 70% oil, butter, and/or cream, which may include, for example, hollandaise sauce and carbonara sauce. The food composition also may be a creamy dessert, such as a dispersion containing from 5 to 50% oil and 0.1 to 50% sugar.

The inventive dressings are characterized by reduced levels of sodium/salt content, flavors/spices, and/or sweeteners which are commonly used to mask unwanted sour flavor or to enhance microbiological stability. The inventive dressings are microbiologically stable at lower than normal pH (i.e., about pH 4.6 or less) without introducing an objectionable sour taste to the food products or with a reduced sourness at comparable pH (i.e., about pH 4.6 or less) when compared to similarly acidified products using conventional food acidulants, including food-grade organic acids such as citric acid, lactic acid, and vinegar.

Shelf-stable dressings of the invention are stable at ambient temperatures for at least about six weeks while refrigeration-stable dressings of the invention are stable at refrigeration temperatures for at least about four weeks.

Preparation of Refrigeration-Stable Fruits and Vegetables. Refrigeration-stable; cold-processed, crispy fruits and vegetables with reduced sourness and salt content may be prepared, without a pasteurization step, by combining fruits and/or vegetables with an acidified solution selected from the group consisting of a membrane acidic electrodialyzed (ED) composition, an edible organic acid, an edible metal acid salt of an inorganic acid, and a mixture thereof, in an amount effective for providing a pH of 4.6 or lower, preferably 4.2 or lower, while total organic acid content is 0.22 moles per 1000 grams of food composition or less, effective to provide refrigeration-stable acidified high-quality fruits or vegetables. Fresh-cut fruits and vegetables are preferred as, but not limited to, the starting raw material. Fresh-cut fruits and vegetables may be substituted with any minimally-processed fruit and vegetable (e.g., individually quick-frozen) with crispness sufficiently preserved.

The inventive fruits and vegetables have a shelf-life under refrigeration conditions for at least one month, in another aspect at least two months, in another aspect at least three months, and in yet another aspect at least four months, and having texture, flavor, and taste similar to that of fresh-cut fruits and vegetables. The fruits and vegetables of the invention do not have an objectionable sour taste or have a reduced sour taste at comparable pH when compared to similarly acidified products using conventional food acidulants, mainly including food-grade organic acids such as citric acid, lactic acid, and vinegar. The inventive fruits and vegetables may further comprise soluble calcium salt to enhance the firmness or textural properties, such as the crispness, of the food product. The organoleptic quality of the inventive fruits and vegetables is surprisingly similar to the quality of fresh-cut fruits and vegetables without objectionable sour and/or salty taste.

All percentages, ratios, parts, and amounts used and described herein are by weight unless indicated otherwise. The examples that follow are intended to further illustrate, and not limit, embodiments in accordance with the invention.

### EXAMPLES

### Example 1. Fat Free Catalina Salad Dressing Acidified with ED Composition

A statistically-designed study based on an experimental fat-free Catalina dressing formula was carried out to establish a micro stability model. Sample pH and salt to water ratio (by weight) were independent variables. In the experimental design (below in Table 1), the design designations of 1,0 and -1 refer to pH 4.0, 3.5, and 3.0, respectively, and the salt to water ratios 0.0385, 0.0192, and 0.0001, respectively. All samples were prepared without a pasteurization treatment in a pilot scale production facility.

**Table 1.**

| Sample# | Design pH | Target pH | Actual pH | Design Salt Level | Target & Actual % addedSalt |
|---|---|---|---|---|---|
| 1 | 0 | 3.5 | 3.54 | -1 | 0 |
| 2 | 1 | 4 | 4.06 | 1 | 2.5 |
| 3 | 0 | 3.5 | 3.51 | 1 | 2.5 |
| 4 | -1 | 3 | 3.04 | 1 | 2.5 |
| 5 | 1 | 4 | 4.08 | -1 | 0 |
| 6 | 0 | 3.5 | 3.47 | 0 | 1.25 |
| 7 | -1 | 3 | 3.02 | -1 | 0 |
| 8 | 0 | 3.5 | 3.54 | 0 | 1.25 |
| 9 | -1 | 3 | 3.01 | 0 | 1.25 |
| 10 | 1 | 4 | 4.02 | 0 | 1.25 |

Electrodialyzed (ED) composition (pH=1.0), tap water (pH=7.0), corn syrup, a dry preparation (food colors, salt, EDTA, potassium sorbate, starch, dehydrated spices, and gums), vegetable oil, and tomato paste were first mixed in the proportions indicated below in Table 2 in a Hobart mixer (standard mixing paddle) to form a coarse emulsion. The resulting mixture was homogenized using a Hydroshear at 180 psi to form a homogenous product that had not been pasteurized during the preparation of the salad dressing. The ratios of tap water to ED composition for each individual sample dressing were predetermined in order to reach the target pH of the final individual dressings.

**Table 2.**

| Ingredient | Weight % |
|---|---|
| Water* | 49.36-51.86 |
| Corn syrup | 36.72 |
| Tomato paste | 7.42 |
| Salt** | 0-2.5 |
| Soybean oil | 0.92 |
| Starch | 1.80 |
| Spices | 0.44 |
| Potassium sorbate | 0.30 |
| EDTA | 0.006 |
| Food color | 0.02 |
| Vitamin E | 0.01 |
| Total | 100.00 |

| | |
|---|---|
| * Water equal to ED composition plus tap water; Ratio varies according to the experimental design ** Actual salt content varies according to the experimental design | |

Sensory evaluation of the product dressing revealed that it had no objectionable sour taste and was excellent in flavor, texture and emulsion stability. To evaluate the microbiological stability of the acidified salad dressing composition, an approximately twenty-five pound sample thereof was aseptically divided into four sterile containers of substantially equal portions. One portion served as a negative control. The other three samples were inoculated with a composite culture of *Salmonella, E. coli* O157:H7, and various spoilage organisms comprised of yeast and heterofermentative and homofermentative *Lactobacillus* strains. A cell suspension was prepared for each pathogen strain used in the inoculum. The pathogen strains were propagated in Trypticase Soy Broth for twenty-four hours at 35°C. Cell suspensions were mixed to prepare an inoculum which contained approximately equal numbers of cells of each strain. The number of viable cells was verified by plate count methods with Trypticase Soy Agar incubated for twenty-four hours at 35°C. The inoculation level was a recoverable level of approximately 1,000 colony forming units per gram for each strain. The inoculated samples and control were held at 72 ° F for at least sixteen weeks.

The inoculated samples were analyzed for each of the above-identified strains at various time intervals. A twenty-five gram sample from each of the control and the three inoculated portions were analyzed by plate count methods at predetermined time periods. Samples of the control were analyzed initially for aerobic plate count by plate count methods. The samples inoculated with *Salmonella* and *E*. *coli* O157:H7 were analyzed initially at 0, 1, 2, 3, 7, and 14 days. Inoculated samples were analyzed for *Salmonella* by plate count and BAM (Bacteriological Analytical Manual) enrichment, and for *E. coli* O157:H7 by plate count and cultural enrichment. *Salmonella* was analyzed using a XLD (xylose-lysine-decarboxylase) medium and incubation time/temperature/atmosphere of 1 day/35°C/aerobic, and *E. Coli* 0157:H7 was analyzed using an MRSA (deMan, Rogosa and Sharpe Agar) and incubation time/temperature/atmosphere of 1 day/35 °C/aerobic.

Once populations decreased to less than ten cells per gram by direct plating, enrichment only was utilized. When three consecutive negative enrichments occurred, plating and enrichments were discontinued The samples inoculated with the various spoilage organisms were analyzed initially at zero days and at two, four, six, eight, twelve, and sixteen weeks and at nine months. The control sample was analyzed for aerobic bacteria and inoculated samples were analyzed for yeast, heterofermentative *Lactobacillus,* and homofermentative *Lactobacillus.* An overall reduction in initial inoculated counts for a minimum of sixteen weeks was observed.

The microbiological results indicated that all tested dressings effectively inactivated (i.e., bactericidal) and inhibited (i.e., prevented propagation) all inoculated microorganisms. The results demonstrated that the inventive dressings meet all the challenge test criteria up to a product pH of about 4.0 even at extremely low salt content (i.e., no added salt or a salt to water ratio of less than 0.001) and nearly fat free (i.e., less than 1%). The present invention thus demonstrated that shelf stable, non-sour food products can be made possible with significantly reduced sodium, fat, and/or caloric content in addition to significantly reduced sourness as a result of low total organic acids in a shelf stable, cold processed food product.

Statistical models were developed which evaluated pH and salt (i.e., NaCl) to water ratio in specific experimental formula between 3 to 4 and 0 to 0.04, respectively, in various combinations to predict the propagation or death of inoculated microorganisms in the salad dressing samples. For each time point, the average microbiological response was transformed to base 10 log. The slope was calculated for each response for every time point from time zero. The slope values were used to determine the models. Positive slopes indicated propagation (i.e., increase in number of inoculated microorganisms) and negative slopes indicated death (i.e., decrease in number of inoculated microorganisms). A consistent negative slope through the entire test period demonstrates superior microbiological stability against inoculated species of microorganisms. Unpasteurized food products must pass all three challenge tests to be considered shelf stable for at least one month under normal ambient storage conditions.

The obtained micro models are expressed mathematically below:
(1) Yeast Model:
   - 0.2100126392143+ (-0.0268097398333)*(pH-3.5)/0.5 + (0,0065328685)*(%salt-50)/50 + ((pH-3.5)/0.5)*((pH-3.5)/0.5)*0.03142908842857 + ((%salt-50)/50)*((pH-3.5)/0.5)*0.00024792325 + ((%salt-50)/50)*((%salt-50)/50)*- 0.0321174695714
(2) Homoferment Lactobacilli Model:
   - 0.0536874883571 + (0.75908107366667)*(pH-3.5)/0.5 + (-0.2829798901667)*(%salt-50)/50 + ((pH-3.5)/0.5)*((pH-3.5)/0.5)*0.49945005021429 + ((%salt-50)/50)*((pH-3.5)/0.5)*(-0.18481536225) + ((%salt,50)/50)*((%salt,50)/50)*0.1876034377429
(3) Heteroferment Lactobacilli Model:
   0.11959192385714 + (0.495631481)*(pH-3.5)/0.5 + (-0.173619313)*(%salt-50)/50 + ((pH-3.5)/0.5)*((pH-3.5)/0.5)*0.29783498328572 + ((%salt-50)/50)*((pH-3.5)/0.5)*(-0.13756890225) + ((%salt-50)/50)*((%salt-50)/50)*- 0.2056376957143

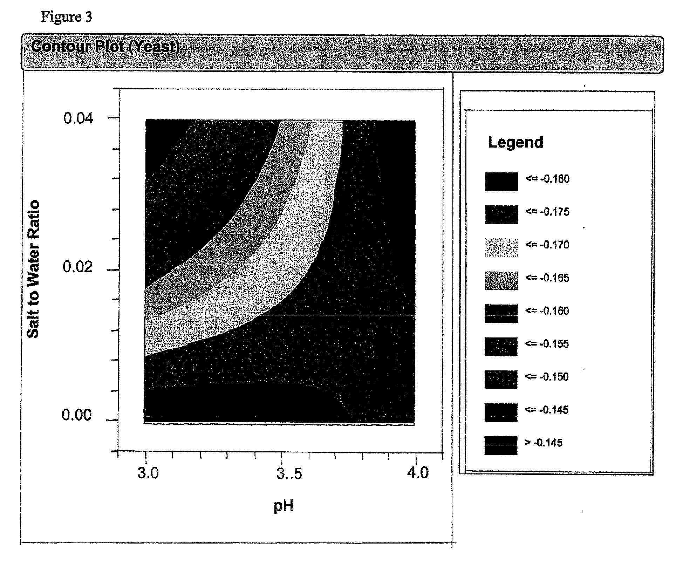

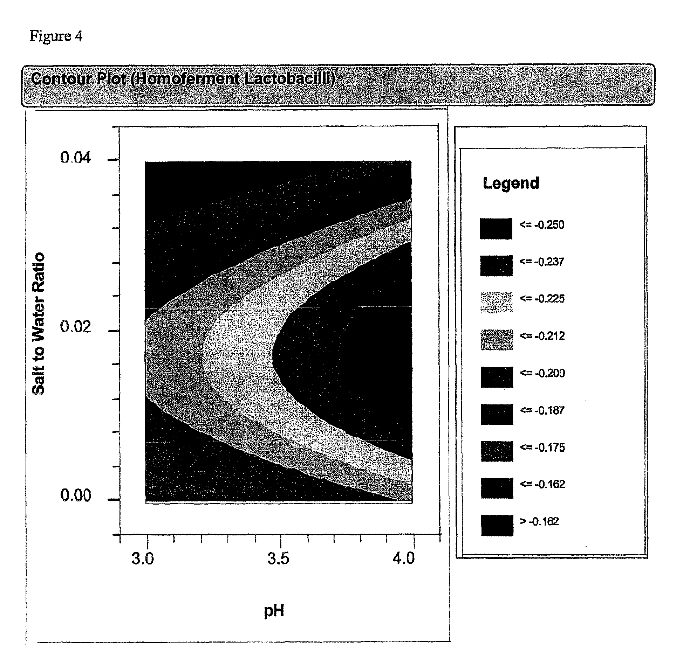

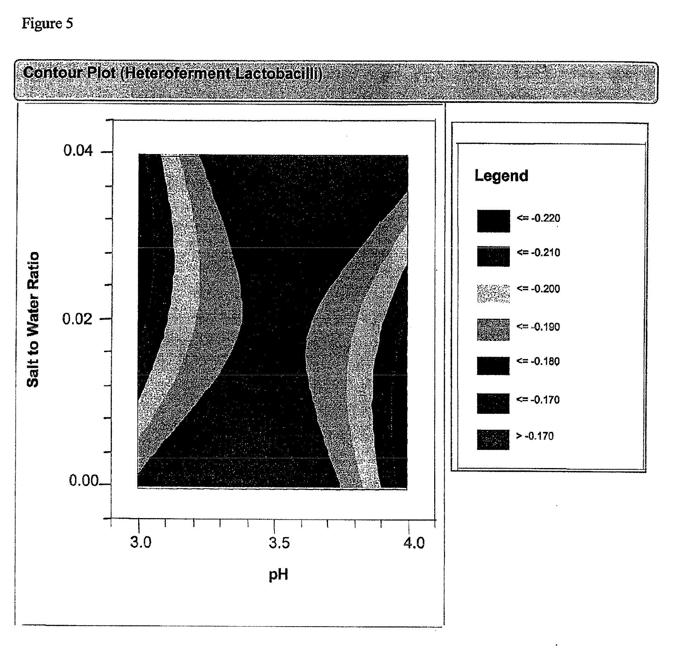

Contour plots corresponding to the above-mentioned models are given in FIGS. 3, 4, and 5 for yeast, homofermentive Lactobacilli, and heterofermentive Lactobacilli, respectively.

### Example 2. Confirmation of the model: Fat Free Catalina Salad Dressing Acidified with ED Composition.

A follow-up study was conducted to verify the validity of the stability model derived from the statistically designed experiment described in Example 1. Additional fat free Catalina salad dressing samples were prepared and microbiologically challenged according to the same test protocol and criteria under ambient storage conditions. The study and results are summarized in Table 3 below.

**Table 3: Verification Samples-Fat Free Catalina Salad Dressing**

| Sample | pH | Salt: Moisture Ratio | Prediction/ Actual Results |
|---|---|---|---|
| 1 | 3.9 | 0.4274 | Death/Death |
| 2 | 3.8 | 0.0308 | Death/ Death |
| 3 | 3.3 | 0.0192 | Death/ Death |
| 4 | 3.95 | 0.0096 | Death/Death |
| 5 | 3.85 | 0.0116 | Death/Death |

The results clearly demonstrate that the sourness- and sodium-reduced Fat Free Catalina salad dressings of the present invention are indeed microbiologically stable under ambient storage condition. Furthermore, the microbiological inhibition and inactivation ability of the inventive Fat Free Catalina salad dressings up to pH 4.0 and with a salt to moisture ratio of 0.0001 or higher has been demonstrated and confirmed.

### Example 3. Shelf Stable Fat-Free Italian Dressing

A shelf stable, non-sour, fat-free Italian salad dressing was prepared without pasteurization in a pilot scale production facility. The Italian salad dressing includes 74.36% water,13.69% corn syrup, 3.62% colors/flavors/spices/others, 3.00% salt, 2.06% garlic puree/minced garlic, 2.00% cheese/dairy components, 0.52% xanthan gum, 0.50% HCl, and 0.25% preservative. The ingredients were mixed in a Breddo mixer to sufficiently disperse all ingredients without applying additional heat. The finished dressing has a pH of about 4.4. Based on a sensory expert panel, this Italian dressing is less sour when compared to the other sample made with vinegar. In addition, the preliminary microbial study showed this dressing has no outgrowth of spoilage or pathogenic microorganisms for more than five weeks when stored at room temperature. Optionally, but not required, about 0.03% to about 0.07% of nisin and/or nisin preparation (i.e., NISAPLIN® from Danisco) can be added to the inventive fat free Italian dressing for additional protection against microbial growth.

### Example 4. Refrigeration Stable Ranch Dressing

A refrigeration stable, non-sour ranch dressing is made without pasteurization in a pilot scale production facility. The ranch dressing includes the following components: 6.1% water, 0.4% hydrochloric acid, a dry mix (1.0% monosodium glutamate, 1.4% sugar, 0.3% salt, 1.5% flavors/spices/others, 1.0% buttermilk powder, 1.0% skim milk powder, 0.3% xanthan gum), 16.5% pasteurized cultured buttermilk, and 7.5% salted egg. These ingredients are first mixed in the proportions indicated in a Hobart mixer. Then 63.0% vegetable oil is added slowly while mixing to form a coarse emulsion. The resulting mixture is homogenized using a Hydroshear at 180 psi to form a homogenous product. Final herbs and spices are added to the homogenized mixture. No pasteurization step is applied to the finished products. The finished product has a pH of 4.4 and is stable under refrigeration conditions for at least four months. Sensory evaluation of the finished product shows it has no objectionable sour taste.

### Example 5. High Quality, Refrigeration-Stable, Crispy Bell Pepper

Fresh red, green, and yellow bell peppers are cleaned and cut to one-half inch dice. An acidified brine solution is prepared with 2% sugar, 2% salt, 0.2% potassium sorbate, 0.7% sodium bisulfate, and 0.2% calcium chloride. About a 1:1 ratio of acidified brine and diced bell peppers are then packed into glass jars. After equilibration in a refrigerator, the bell peppers have a pH ranging from about 3.2 to about 3.4. Even at this low pH, the bell peppers are not objectionably sour and there is no outgrowth of microbials after five months stored in refrigeration conditions.

### Example 6. High Quality, Crispy Acidified Carrots

Fresh/raw carrots are purchased from a local supermarket, cleaned, peeled, and sliced to about one-fourth to one-half inch coin. A solution is prepared with 2% salt, 2% sucrose, 0.2-0.3% calcium chloride, 0.1% potassium sorbate, and 0.1% benzoate. Food grade hydrochloric acid is added to reach the final equilibration pH of from about 3.0 to about 3.75. The solution and carrots are combined and stored under refrigeration for at least one day of equilibrium time. The amount of solution added to the carrots depends on the pH of the solution and the duration of acidification treatment. The carrot and solution ratio can vary in order to reach a targeted final pH of the non-sour, acidified carrot. Generally, the carrot to solution ratio is about 1.5 to about 0.3 when using a simple soaking procedure. The ratio may be increased if a spraying procedure is used along with a more acidic solution.

The non-sour, acidified carrots are then separated from the solution and packaged. The solution-free, packaged carrots were then stored under refrigeration condition for at least one month with no microbial outgrowth.

### Example 7. High Quality, Refrigeration-Stable, Crispy Minced Garlic

Garlic is cleaned and minced to about one-eighth inch cubes. Equal amounts of minced garlic and an acid solution consisting of 0.1% potassium sorbate are combined and a proper amount of HCl or acidic calcium sulfate solution is added to reach equilibrium pH of about 3.6 or below. These samples are much less sour and less salty in comparison to those conventionally acidified with a vinegar-based solution in a group evaluation. The non-sour, acidified garlic showed no microbial outgrowth after at least one month under refrigeration storage condition.

### Example 8. Refrigerated Ranch Dressing with Crispy and Chunky Carrots

Fifteen to twenty percent of drained, acidified, diced carrots (similar to the carrots in Example 6) are incorporated into the refrigeration stable ranch dressing of Example 4. The combined samples are stored under refrigeration condition and the acidified carrots maintain chunky and crispy in texture for at least one month without detectable microbial outgrowth.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A method for preparing a low pH, microbiologically-stable, unpasteurized food composition with reduced sourness and salt content comprising preparing the food composition with an acidulant selected from the group consisting of a membrane acidic electrodialyzed (ED) composition, an edible inorganic acid, an edible metal acid salt of an inorganic acid, and a mixture thereof in an amount effective for providing a food composition with a final pH of about 4.6 or less, without a final pasteurization treatment, wherein the food composition has a total organic acid content of 0.22 moles per 1000 grams of food composition or less.

2. The method of Claim 1, wherein the food composition has a sodium content of 0.5 moles per 1000 grams of food composition or less or a salt to water ratio of about 0.05 or less.

3. The method of Claim 1 or 2, wherein the food composition is selected from the group consisting of dressings, soups, mayonnaise, sauces, gravies, spreads, dips, marinades, salads, fillings, vegetables, fruits, starches, meats, seafood, cereals, baked goods, confections, toppings, desserts, juices, beverages, snacks, and mixtures thereof.

4. The method of any one of Claims 1 to 3, wherein the food composition comprises a reduced-fat foodstuff or a fat-free foodstuff.

5. The method of any one of Claims 1 to 4, wherein the food composition comprises a salad dressing.

6. The method of Claim 5, wherein the salad dressing further includes colorants, flavors, nutrients, antioxidants, herbs, spices, fruits, vegetables, nuts and/or other food additives.

7. The method of Claim 5 or 6, wherein the salad dressing includes vegetable oil, water, emulsifier, and at least one dairy product.

8. The method of Claim 7, wherein the at least one diary product comprises milk, whey, buttermilk, a cheese product, or a combination thereof.

9. The method of any one of Claims 1 to 8, wherein the provided food composition has a final pH of about 3.5 to about 4.6 under ambient storage conditions.

10. The method of any one of Claims 1 to 8, wherein the provided food composition has a final pH of about 3.5 to about 4.2 under ambient storage conditions.

11. The method of any one of Claims 1 to 8, wherein the provided food composition has a final pH about 4.2 or less under refrigerated storage conditions.

12. The method of Claim 11, wherein the provided food composition has a final pH of about 4.0 or less under refrigerated storage conditions.

13. The method of any one of Claims 1 to 12, wherein the food composition is selected from the group consisting of crispy fruit, crispy vegetable, or a combination thereof.

14. The method of Claim 13, wherein the food composition further comprises soluble calcium salt at a level of 0.05% or greater.

15. The method of any one of Claims 1 to 14, wherein the food composition has an Aw of 0.85 or greater.

16. The method of any one of Claims 1 to Z 5, wherein the food composition is maintained in a temperature range of less than about 165° F throughout said preparing thereof.

17. The method of any one of Claims 1 to I6, wherein the food composition is sodium-free.

18. The method of any one of Claims 1 to 17, wherein the food composition further contains a preservative at a level of 0.005% or greater.

19. The method of Claim 18, wherein the preservative used in the food composition comprises bacterocin, potassium sorbate, EDTA, polylysine, propionate, or a combination thereof.

20. The method of any one of Claims 1 to 19, wherein the food composition further contains antimycotic agent in an amount effective to inhibit yeast and mould growth.

21. The method of Claim 20, wherein the antimycotic agent used in the food composition comprises sorbic acid and/or its salt at a level of about 0.01% or greater.

22. The method of any one of Claims 1 to 21, wherein the inorganic acid is selected from the group consisting of hydrochloric acid, sulfuric acid, sodium bisulfate, potassium bisulfate, calcium acid sulfate, and mixtures thereof.

23. A microbiologically-stable, high moisture reduced sourness food composition prepared by a method comprising preparing a foodstuff with an acidulant selected from the group consisting of a membrane acidic electrodialyzed composition, an edible inorganic acid, an edible metal salt of an inorganic acid, and mixture thereof in an amount effective for providing a food composition with a final pH of 4.6 or less, with no final pasteurization treatment, wherein the food composition has a total organic acid content of 0.22 moles per 1000 grams of food composition or less.

24. The food composition of Claim 23, wherein the food composition has a sodium content of 0.5 moles per 1000 grams of food composition or less or a salt to water ratio of about 0.05 or less.

25. The food composition of Claim 23 or 24, wherein the food composition is selected from the group consisting of salad dressings, soups, mayonnaise, sauces, gravies, spreads, dips, marinades, salads, fillings, desserts, juices, beverages, snacks, dairy, egg, meat, seafood, legumes, starches, cereals, vegetables, fruits, spices and mixtures thereof.

26. The food composition of Claim 28, wherein the food composition comprises a reduced-fat foodstuff or a fat-free foodstuff.

27. The food composition of any one of Claims 23 to 26, wherein the food composition comprises a salad dressing.

28. The food composition of Claim 27, wherein the salad dressing includes vegetable oil, water, an emulsifier, and at least one dairy product.

29. The food composition of Claim 28, wherein the at least one dairy product comprises milk, whey, buttermilk, a cheese product, or a combination thereof.

30. The food composition of any one of Claims 27 to 29, wherein the salad dressing further includes colorants, flavors, nutrients, antioxidants, herbs, spices, fruits, vegetables, nuts and/or other food additives.

31. The food composition of any one of Claims 23 to 30, wherein the provided food composition has a final pH of about 3.5 to about 4.6 under ambient storage conditions.

32. The food composition of any one of Claims 23 to 30, wherein the provided food composition has a final pH of about 3.5 to 4.2 under ambient storage conditions.

33. The food composition of any one of Claims 23 to 30, wherein the provided food composition has a final pH of about 4.2 or less under refrigerated storage conditions.

34. The food composition of any one of Claims 23 to 30, wherein the provided food composition has a final pH of about 4.0 or less under refrigerated conditions.

35. The food composition of any one of Claims 23 to 34, wherein the food composition is selected from the group consisting of crispy fruit, crispy vegetable, or a combination thereof.

36. The food composition of any one of Claims 23 to 35, wherein the food composition further comprises soluble calcium salt at a level of 0.05% or greater.

37. The food compositions of any one of Claims 23 to 36, wherein the food composition has an Aw of 0.85 or greater.

38. The food composition of any one of Claims 23 to 37, wherein the food composition is maintained in a temperature range of less than about 165°F throughout said preparing thereof.

39. The food composition of any one of Claims 23 to 38, wherein the food composition is sodium free.

40. The food composition of any one of Claims 23 to 38, wherein the food composition further contains a preservative at a level of 0.005% or greater.

41. The food composition of Claim 40, wherein the preservative used in the food composition comprises bacterocin, potassium sorbate, EDTA, polylysine, propionate, or a combination thereof.

42. The food composition of any one of Claims 23 to 38, wherein the food composition further contains antimycotic agent in an amount effective to inhibit yeast and mold growth.

43. The food composition of Claim 42, wherein the antimycotic agent used in the food composition comprises sorbic acid and/or its salt at a level of about 0.01 % or greater.

44. The food composition of any one of Claims 23 to 43, wherein the inorganic acid is selected from the group consisting of hydrochloric acid, sulfuric acid, sodium bisulfate, potassium bisulfate, calcium acid sulfate, and mixtures thereof.
